# EUROPÄISCHE PATENTSCHRIFT

(11) **EP 3 007 931 B1**
(45) Veröffentlichungstag und Bekanntmachung des Hinweises auf die Patenterteilung: **25.09.2019**
(21) Anmeldenummer: 14742350.3
(22) Anmeldetag: 13.06.2014
(51) Int. Cl.: B60P 3/22, B65D 90/52, B60K 15/077

(54) **SCHWALLWANDELEMENT UND TRANSPORTBEHÄLTERANORDNUNG MIT EINEM SOLCHEN**
BAFFLE PLATE ELEMENT AND TRANSPORT CONTAINER ARRANGEMENT WITH SUCH A BAFFLE PLATE ELEMENT
ÉLÉMENT BRISE-FLOT ET ENSEMBLE CONTENEUR DE TRANSPORT POURVU DUDIT ÉLÉMENT

(30) Priorität: 14.06.2013 DE 202013102563 U
(43) Veröffentlichungstag der Anmeldung: 20.04.2016
(73) Patentinhaber: Welfit Oddy (Pty) Limited, Port Elizabeth 6001 (ZA)
(72) Erfinder: McLAREN, Timothy Neil, Port Elizabeth 6001 (ZA); RIGBY, Sydney Vernon, Port Elizabeth 6070 (ZA); VOSLOO, Benjamin Andries, Port Elizabeth 6025 (ZA)
(74) Vertreter: MFG Patentanwälte Meyer-Wildhagen Meggle-Freund Gerhard PartG mbB
(86) Internationale Anmeldenummer: PCT/IB2014/001051
(87) Internationale Veröffentlichungsnummer: WO 2014/199223

(56) Entgegenhaltungen:
- EP-A1- 2 058 245
- EP-A1- 2 412 647
- DE-B3-102008 017 266
- US-A- 2 860 809

## Beschreibung

### GEBIET DER ERFINDUNG

Die vorliegende Erfindung bezieht sich allgemein auf ein Schwallwandelement und eine Transportbehälteranordnung, insbesondere ein Tankcontainer, mit einem solchen Schwallwandelement.

### HINTERGRUND DER ERFINDUNG

Schwallwandelemente dienen dazu, in teilgefüllten Transportbehältern den Schwall eines flüssigen Ladegutes bei Verzögerungen oder Beschleunigungen während des Transports (Straße, Schiene, See) auf einem Fahrzeug zu behindern bzw. erheblich zu reduzieren. Solche Transportbehälter haben typischerweise einen kreiszylindrischen, elliptischen, kofferförmigen oder auch rechteckigen Querschnitt und sind an ihren Enden mit gewölbten oder ebenen Böden verschlossen. Es gibt auch Tankquerschnitte die kleeblattförmig bzw. aus mehreren Kreissegmenten zusammengesetzt sind. Schwallwandelemente durchsetzen dabei den Behälterinnenraum und decken meist gemäß den einschlägigen Transportvorschriften wenigstens 70% des relevanten Querschnitts des Behälterinnenraums ab. Die Schwallwandelemente verlaufen bei den meist länglichen Transportbehältern in der Regel quer zu deren Längsachse.

Schwallwandelemente können beispielsweise als mit Öffnungen versehene Scheibenelemente ausgeführt sein. Es gibt aber auch ebene und bogenförmig gewalzte bzw. über mehrere Kantungen gekrümmte Halbmond- oder Sichelelemente, die mit freien Kanten, welche die Sehne des Halbmondelements bilden, den Behälterinnenraum vollständig durchsetzen. Um diese freien Kanten zu verstärken sind runde oder tränenförmige Rohrstücke bekannt, die den Behälterinnenraum entlang der freien Kante vollständig durchsetzen.

An den Anschlussenden der freien Kanten bzw. der Verstärkungsrohre, an denen die Schwallwände bzw. die Rohre in die Behälterwand münden, können hohe lokale Spannungen auftreten, die durch Druckbelastungen und/oder Schwallbelastungen verursacht werden. Lokalen Überbeanspruchungen in diesen kritischen Bereichen können im schlimmsten Fall sogar eine Beschädigung der Behälterwand hervorrufen. Dieses Festigkeitsproblem tritt insbesondere bei solchen Schwallwandelementen auf, bei denen die freien Kanten mit oder ohne zusätzlicher Verstärkung im Vergleich zur membranartigen Behälterwand sehr steif ausgebildet sind. Schwallwandanordnungen sind z. B. aus der EP 2 058 245 A1 oder der gattungsgemäßen EP 2 412 647 A1 bekannt.

Davon ausgehend besteht die Aufgabe, ein Schwallwandelement bzw. eine Transportbehälteranordnung zur Verfügung zu stellen, welche die Nachteile der verfügbaren Lösungen wenigstens teilweise ausräumt. Insbesondere besteht die Aufgabe auch darin das Anschlussende, an dem das Schwallwandelement mit einer freien Kante auf die Behälterwand trifft, konstruktiv so zu verbessern, dass lokale Spannungen in diesem Bereich bei den zu erwartenden Betriebslasten minimiert werden.

### ZUSAMMENFASSUNG DER ERFINDUNG

Nach einem ersten Aspekt stellt die vorliegende Erfindung ein Schwallwendelement mit einem Anschlussende bereit, bei dem das Anschlussende einen ersten Anschlussbereich zum Anschluss an eine Behälterwand aufweist und eine Endastungskante, welche ein Ende einer freien Schwallwandkante mit dem ersten Anschlussbereich verbindet, wobei die Entlastungskante einen ersten Abschnitt aufweist, der entlang dem ersten Anschlussbereich verläuft und mit diesem einen Rippenabschnitt bildet, einen zweiten Abschnitt, der den ersten Abschnitt mit einer freien Kante des Schwallwandelements verbindet, und die Entlastungskante glatt zwischen dem ersten Anschlussbereich und der freien Kante verläuft.

Glatter Verlauf bedeutet hier, dass der Kantenverlauf keine Ecken, Stufen oder Sprünge aufweist und unterschiedlich gekrümmte bzw. gerade Abschnitte der Entlastungskante ebenso - also glatt - ineinander übergehen.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen der Erfindung.

### KURZBESCHREIBUNG DER ZEICHNUNG

Ausführungsformen der Erfindung werden nun beispielhaft und unter Bezugnahme auf die beigefügten Figuren beschrieben. Darin zeigt:
- Fig. 1: eine Querschnittsdarstellung eines Transportbehälters mit zwei erfindungsgemäßen einander gegenüberliegenden Schwallwandelementen, die jeweils an ihren Enden Anschlussenden aufweisen;
- Fig. 2: eine Schnittdarstellung (Schnitt A-A aus Fig. 1) des Anschlussendes eines erfindungsgemäßen Schwallwandelements;
- Fig. 3: eine perspektivische Darstellung eines Anschlussendes aus Fig. 1 (Detail B), welches über ein Dopplerblech mit einer Behälterwand verbunden ist;
- Fig. 4: eine Ansicht des in Fig. 3 dargestellten Anschlussendes mit geometrischen Kenngrößen;
- Fig. 5: ein einstückig ausgebildetes Anschlussende gemäß der vorliegenden Erfindung; und
- Fig. 6: 6A und 6B alternative Ausführungsbeispiele eines erfindungsgemäßen Schwallwandelements mit Anschlussende;

### BESCHREIBUNG VON AUSFÜHRUNGSFORMEN

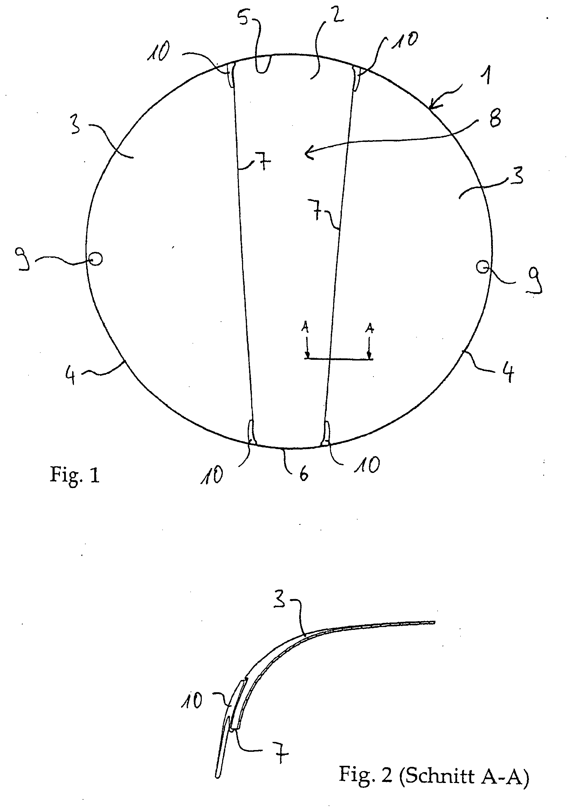

In Fig. 1 ist eine Ausführungsform in Übereinstimmung mit der vorliegenden Erfindung veranschaulicht. Vor einer detaillierten Beschreibung folgen zunächst allgemeine Erläuterungen zu Ausführungsformen.

Bei einem erfindungsgemäßen Schwallwandelement ist gemäß einem ersten Aspekt der Erfindung ein Anschlussende vorgesehen, welches einen ersten Anschlussbereich zum Anschluss an eine Behälterwand aufweist und im Einbauzustand dort mit dieser fest verbunden ist, insbesondere verschweißt. Eine Entlastungskante verbindet ein Ende einer freien Schwallwandkante, die bei eingebautem Schwallwandelement den Tankinnenraum durchsetzt mit dem ersten Anschlussbereich, der wiederum mit der Behälterwand - direkt oder über ein Dopplerblech-verbunden ist.

Dabei definiert ein erster Abschnitt der Endastungskante einen entlang dem ersten Anschlussbereich verlaufenden Rippenabschnitt und einen zweiten Abschnitt, der diesen ersten Abschnitt der Entlastungskante, welcher den Rippenabschnitt definiert, mit der freien Kante des Schwallwandelements verbindet. Die Entlastungskante verläuft dabei glatt zwischen dem ersten Anschlussbereich und der freien Kante. In anderen Worten, der erste und zweite Abschnitt gehen glatt - ohne Ecken -ineinander über, und der Rippenabschnitt folgt dem Anschlussbereich, welcher der Behälterkontur entspricht, und zwar dort, wo dieser mit dem Behälter verbunden ist. So trifft die freie Kante nicht direkt auf die Behälterwand, sondern wird über die Entlastungskante in eine zungenartige Rippe übergehend auf die Behälterwand geführt.

Dadurch wird ein starrer Übergang zwischen freier Kante und Behälter vermieden, der bei Belastungen des Schwallwandelementes durch Schwall und/oder Druckbeanspruchungen des Behälters hohe lokalen Spannungen erfahren würde. Solche Spannungsspitzen werden zum einen durch die Rippe selbst verringert. Sie werden nämlich in den weniger kritischen Übergangsbereich zwischen freier Kante und Entlastungskante verlagert und zusätzlich durch den Verlauf des flexibelelastischen Rippenabschnitts am Übergang zwischen Schwallwandelement und Behälterwand verringert und entlang dem Rippenverlauf am Behälter verteilt.

Dieser konstruktive Ansatz reduziert zum einen die auftretenden Spannungen zwischen Behälterwand und Schwallwandelement insgesamt. Gleichzeitig werden die möglicherweise auftretenden Spannungsspitzen verteilt - also abgebaut - und in einen Bereich des Schwallwandelementes, der für die Funktion des Behälters nur nebengeordnete Bedeutung hat verlagert. Selbst bei einer Überbeansprucheng der Schwallwand am Anschlusssende kommt es schlimmstenfalls zu einer Überlastung der Schwallwand selbst, eine kritische Belastung der Behälterwand selbst wird weitgehend vermieden.

Bei typischen Schwallwandordnungen sind zwei einander gegenüberliegende Schwallwandelemente auf, die streifen- oder halbmondförmig in einem (z.B. kreisrunden) Behälterquerschnitt eingebracht werden und deren einander zugewandte freie Kanten einen V-förmigen Durchstieg definieren, der den Behälter etwa vertikal durchsetzt. Die Schwallwandenden bzw. die Anschlussenden der freien Kanten treffen dabei im Sohlen- bzw. im Scheitelbereich des Behälters auf die Behälterwand. Die höchsten Beanspruchungen erfahren dabei die Anschlussenden im Sohlenbereich, in dem eine mögliche Leckage besonders kritisch wäre. Die erfindungsgemäße Ausführung der Schwallwandelemente verringert damit das Leckagerisiko erheblich.

Bei einer Ausführung ist dazu der erste-den Rippenabschnitt definierende-Abschnitt über einen konkav gekrümmten Übergangsabschnitt mit dem zweiten Abschnitt verbunden. Dieser Übergangsabschnitt weist einen Radius R auf, der so gestaltet ist, dass er einen möglichst kerbfreien Übergang zwischen den beiden Abschnitten erlaubt.

In einer weiteren Ausführung ist vorgesehen, dass die Entlastungskante am Ende des Rippenabschnitts einen konvex gekrümmten Endabschnitt mit einem zweiten Radius r aufweist, der kleiner ist als der erste Radius R. Dieser verringerte konvexe Endradius ermöglicht eine spannungsgünstige und schweißgerechte Gestaltung des Rippenendes, nämlich in dem Bereich an dem dieses Ende auf die Behälterwand trifft.

Dabei kann in einer Ausführung zwischen dem ersten und zweiten Radius bzw. zwischen dem ersten und zweiten Abschnitt ein gerader Verbindungsabschnitt verlaufen. Dieser geht jeweils glatt in die Radien über und verhindert Spannungssprünge im Rippenbereich.

In einer Ausführung, bei welcher dieser Verbindungsabschnitt mit dem ersten Anschlussbereich einen Winkel α einschließt, sodass sich der Rippenabschnitt vom Übergangsabschnitt ausgehend zum Endabschnitt hin verjüngt, sind die Spannungsverhältnisse weiter verbessert. Die Dauer- und/oder Spitzenbelastbarkeit sowohl des Schwallwandelements selbst als auch der Anschlusszone des Behälters kann erhöht werden. Bezogen auf den Fußpunkt im Endbereich hat sich dabei ein Winkel zwischen 5° und 15° und insbesondere zwischen 8° und 12° bewährt.

In einer Ausführung springt die Entlastungskante im Übergangsabschnitt hinter den Verlauf der freien Kante zurück. Damit lässt sich in dem Bereich, an dem die Entlastungskante am weitesten hinter den (geraden) Verlauf der freien Kante zurückspringt, eine Zone maximaler Flexibilität des Schwallwandelements in seinem Anschlussende definieren, der die Dauerfestigkeit in diesem Bereich weiter erhöht.

Das hier Gesagte gilt sowohl für solche Schwallwandelemente, bei denen das Anschlussende einstückig ausgeformt und ausgebildet ist als auch für solche, bei denen das Anschlussende als getrenntes Element ausgeführt ist, welches mit dem Schwallwand verbunden, insbesondere verschweißt ist.

Bei einer Ausführung ist das Anschlussende dabei plattenförmig mit einer Wandstärke t ausgebildet, die dem ein- bis zweifachen der Wandstärke des Schwallwandelements selbst entspricht. Damit lässt sich nicht nur die gewünschte und oben beschriebene Spannungsverteilung verbessern. Darüber hinaus kann auch das besonders hoch beanspruchte Anschlussende zusätzlich durch die Wandstärkenerhöhung stabilisiert werden, indem es z.B. auch auf die vorhandene Wandstärke des Behälters abgestimmt werden kann. So können Wandstärkensprünge zwischen der Behälterwand und dem relativ dünnwandigeren Schwallwandelement im kritischen Bereich des Anschlussendes verringert werden.

Das Anschlussende kann dabei z.B. auch überlappend mit dem Schwallwandelement angeordnet werden, entweder als aufgesetzte Platte oder als die freie Kante des Schwallwandelements umgreifender Schuh. So ein Schuh weist dann beispielsweise am Ende des Rippenabschnitts eine Kantlinie aufweist, an der die beiden den Schuh bildenden Flanken zusammengefaltet werden. Der Anschluss des Anschlussendes oder Anschlussstückes erfolgt dann über besonders einfach ausführbare Kehlnähte. Ein so überlappendes Anschlussstück/Anschlussende ist sehr fertigungstolerant, da die richtige Position durch Verschieben entlang dem Schwallwandelement erreicht werden kann.

In einer anderen Ausführung wird das Anschlussende/Anschlussstück in einer im Schwallwandelement ausgebildeten Ausnehmung verschweißt, deren Kontur einem zweiten Anschlussbereich entspricht. Diese Ausführung ist fertigungstechnisch etwas aufwändiger. Die Gestalt der Ausnehmung und des zweiten Anschlussbereiches müssen genau aufeinander abgestimmt sein und - im Gegensatz zur aufgesetzten Platte - erfolgt die Verbindung über einen Vollanschluss (I-Naht). Diese Ausführung sie ist aber hinsichtlich ihrer Festigkeitseigenschaften zu bevorzugen und insbesondere hinsichtlich ihrer Dauer- und Wechselfestigkeit zu bevorzugen.

Die Erfindung betrifft ebenfalls eine Transportbehälteranordnung, insbesondere einen Tankcontainer mit einem Behälter, der in seinem Inneren ein oder mehrere Schwallwandelemente nach einem der vorhergehenden Ansprüche aufweist.

Dies können die oben besprochenen halbmondförmigen Schwallwandelemente sein, es kann sich aber auch um streifenförmige Schwallwandelemente handeln, welche den Behälter quer in beliebiger Richtung also vertikal, horizontal oder schräg durchsetzen und gegebenenfalls auch zwei freie Kanten aufweisen (vgl. Figur 7).

Oft ist bei Schwallwandelementen, die mit der Behälterwand verschweißt sind, zwischen der Behälterwand und der Anschlusskante des Schwallwandelementes ein Dopplerblech vorgesehen, welches die Spannungen in der Behälterwand reduzieren soll. Diese Spannungen sind insbesondere im Bereich der Anschlussenden - also dort wo die freien Kanten auf die Behälterwand treffen - besonders hoch. Durch die erfindungsgemäße Gestaltung des Anschlussendes in der oben angegebenen Weise kann der Einsatz dieser sogenannten Dopplerbleche auf den Bereich der Anschlussenden selbst beschränkt werden. Ein solches Dopplerblech geht dann üblicherweise um das 5 bis 10-fache der Wandstärke des Anschlussendes bzw. des Anschlussbereiches über den ersten Anschlussbereich hinaus, und zwar in alle Richtungen.

Zurückkehrend zur Fig. 1 zeigt diese einen zylindrischen Behälter 1 im Querschnitt in einer Ansicht entlang der Längsachse Behälters 1. Den Innenraum 2 durchsetzt ein Paar Schwallwandelemente 3, die jeweils etwa halbmondförmig einen Flankenbereich des Innenraums 2 abdecken. Die Schwallwandelemente 3 sind entlang ihrer Umfangskontur mit der Innenseite 5 der Behälterwand 6 des Behälters 1 verbunden, insbesondere verschweißt. Zur Mitte Behälters 1 hin enden die Schwallwandelemente 3 mit einer etwa vertikal verlaufenden freien Kante 7, die jeweils den Innenraum 2 des Behälters 1 durchsetzen. Der Behälter 1 ist Teil einer Transportbehälteranordnung, die beispielsweise als Tankcontainer, Fahrzeugtank oder Eisenbahnkesselwagen ausgebildet ist.

Die freien Kanten 7 bilden einen etwa vertikal verlaufenden Durchgangsspalt 8, der sich vom oberen Behälterscheitel zur unteren Behältersohle hin trapezförmig verjüngt. Im Flankenbereich des Transportbehälters 1 weisen die Schwallwandelemente jeweils eine Ausgleichsöffnung 9 auf, die sicherstellt, dass im Havariefall auch bei einem auf der Seite liegenden Behälter 1 eine kommunizierende Verbindung zwischen den durch die Schwallwandelemente 3 gebildeten Abteilen besteht.

Der in Fig. 2 dargestellte Teilschnitt A-A zeigt, dass die Schwallwandelemente 3 bei dieser Ausführung einfach bzw. mehrfach gewölbt ausgebildet sind. Die hier ausgeführte Wölbung verläuft parallel zu den freien Kanten 7. Die Anschlussenden sind hier als separate Anschlussstücke 10 ausgebildet und dienen dazu, einen spannungsoptimierten Übergang zwischen den freien Kanten 7 und der Behälterwand 6 zu gestalten. Die Begriffe Anschlussende und Anschlussstück sollen hier synonym verstanden werden.

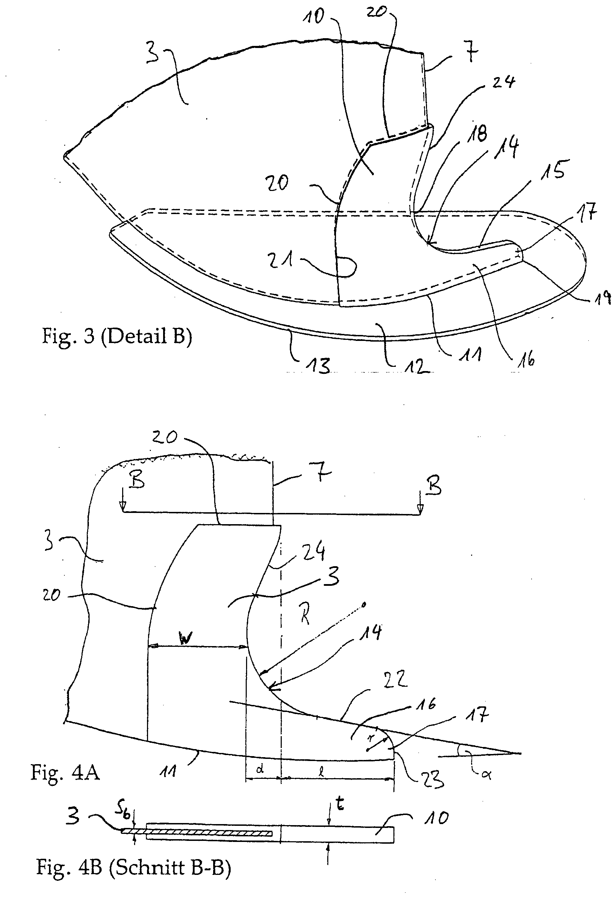

Die Figuren 3 und 4 zeigen ein solches Anschlussstück bzw. Anschlussende 10 im Fußbereich des Transportbehälters 1. Das Anschlussstück 10 umfasst einen ersten Anschlussbereich 11, der als der Behälterwand 6 folgende Anschlusskante ausgebildet ist. Entlang dieser Anschlusskante 11 ist das Anschlussstück 10 mit der Innenseite 5 der Behälterwand 6 verbunden, insbesondere verschweißt.

In der in Fig. 3 dargestellten Ausführung ist zwischen dem ersten Anschlussbereich 11 und der Behälterwand 6 ein optionales Dopplerblech 12 angeordnet, das entlang seinem Rand 13 mit der Behälterwand 6 verschweißt ist. Das Anschlussstück 10 weist eine Entlastungskante 14 auf, welche die freie Kante 7 mit dem ersten Anschlussbereich 11 verbindet.

Die Entlastungskante 14 weist einen ersten Abschnitt 15 auf, der etwa entlang dem ersten Anschlussbereich 11 verläuft und einen Rippenabschnitt 16 definiert, der von einem zweiten Abschnitt 18 der Entlastungskante 14 ausgeht und sich zu seinem Ende 17 hin verjüngend entlang der Behälterwand 6 bzw. dem Dopplerblech 12 verläuft. Der zweite Abschnitt 18 verbindet den ersten Abschnitt 11 mit der freien Kante 7 des Schwallwandelements 3.

Dabei verläuft die Entlastungskante 14 zwischen dem Anschluss an die freie Kante 7 und dem Ende 17 des Rippenabschnitts 16 glatt und durchstößt an ihrem Fußpunkt 19 die Behälterwand 6 bzw. das Dopplerblech 12 etwa senkrecht. Das Anschlussende 10 ist über einen zweiten Anschlussbereich 20 mit dem Schwallwandelement 3 verbunden. In der in Fig. 3 dargestellten Ausführung weist das Schwallwandelement 3 eine im zweiten Anschlussbereich 20 entsprechende Ausnehmung auf.

Die Entlastungskante 14 weist im zweiten Abschnitt 18 einen konkaven Radius R auf, der zum Rippenabschnitt 16 hin glatt in den ersten Abschnitt 15 mündet, der aus einem geraden Verbindungsabschnitt 22 gebildet wird, der wiederum zum Ende 17 hin in einen kleinen konvexen Übergangsradius r mündet und der über ein gerades Endstück 23 in die Behälterwand 6 bzw. das Dopplerblech 12 mündet.

Zur freien Kante 7 des Schwallwandelementes 3 bildet eine Anschlusskontur 24 ausgehend vom Radius R den Anschluss der Entlastungskante 14 zum Schwallwandelement 3. Der Radius R ist dabei so ausgebildet, dass die Kontur des zweiten Abschnitts 18 um den Betrag d hinter den Verlauf der geraden freien Kante 7 zurückspringt, sodass im Radiusbereich R ein definierter Endastungsbogen ausgebildet ist.

Fig. 4A und Fig. 4B zeigen eine Ausführung, bei der die Schwallwand 3 eben ausgeführt ist, d.h. ohne Wölbung um die freie Kante 7 und gibt geometrische Abhängigkeiten zur Dimensionierung des Anschlussstückes 10 wieder. Es gibt auch Ausführungen, bei denen das Anschlussstück 10, das an einem gewölbten Schwallwandelement 3 angeordnet ist nur teilweise der Wölbung folgt, z.B. bis zur freien Kante 7 und über die Kante 7 hinausstehende Bereiche (z.B. der Rippenabschnitt 16) ungewölbt, also gerade, verlaufen.

Dabei gelten für Ausführungsbeispiele die Größen gemäß folgender Tabelle:

| **Größe** | **Minimum** | **Maximum** | **Bemerkung** |
|---|---|---|---|
| D: Behälterdurchmesser | 1750 mm | 2600 mm | Typischer Behälterdurchmesser für Transportbehälter |
| sᵥ: Wanddicke Behälter | Je nach Vorschrift | | Typischerweise zwischen 4 und 15 mm |
| s_{b}: Wanddicke Schwallwandelement | 3 mm | 8 mm | |
| T: Wanddicke Anschlussende | 6 mm | 16 mm | Typischerweise das zweifache von s_{b} |
| r: konvexer Radius am Ende 17 | 10 mm | 25 mm | |
| R: konkaver Radius im ersten Anschlussbereich 11 | 30 mm | 60 mm | |
| α: Neigungswinkel des Rippenabschnitts 16 zur Behälterwand | 5° | 20° | |

Insbesondere gilt auch Folgendes. Die Wandstärke t des Anschlussstücks 10 entspricht dem ein- bis zweifachen der Wandstärke s_{b}, die in der Regel zwischen 3 mm und 8 mm liegt. Dieser Zusammenhang gilt für Wandstärken sᵥ des Behälters von 4 mm bis ca. 15 mm und gilt für Behälterinnendurchmesser zwischen 1750 mm und 2600 mm.

Der Radius r beträgt etwa das 2,5-fache der Wandstärke t des Anschlussstücks 10. Der Radius R beträgt das 1- bis 6-fache des Radius r. Die gerade Länge 1 (gerader Verbindungsabschnitt 22) des Rippenabschnitt 16 beträgt etwa das 5- bis 10-fache der Dicke t des Anschlussstücks 10 und der Rücksprung d hinter den Verlauf der freien Kante 7 beträgt etwa bis zu R/2. Die Breite W entspricht etwa der Länge 1 des Rippenbereiches 16

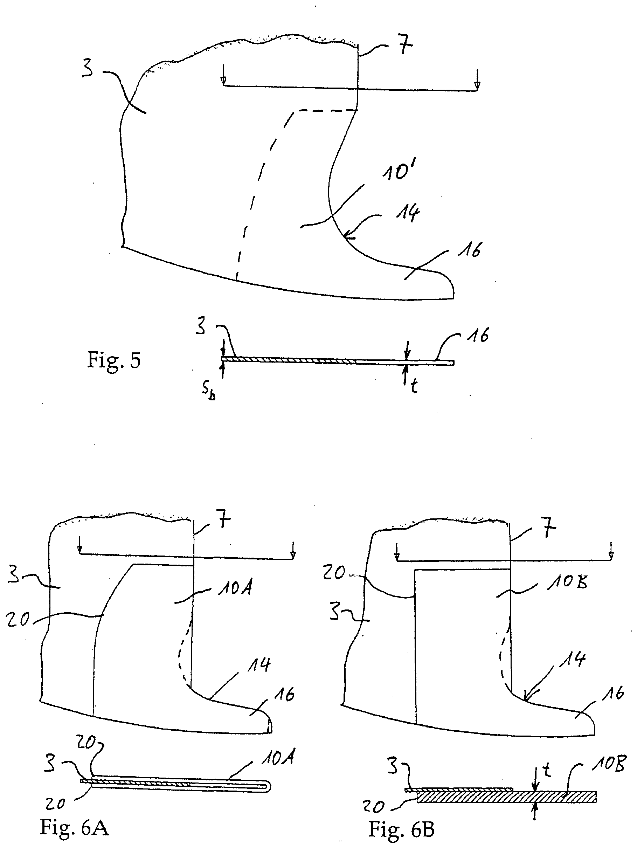

Fig. 5 zeigt eine Ausführung, bei der das Anschlussende 10' einstückig am Schwallwandelement 3 ausgebildet ist. Ein solches Anschlussende 10' weist überall die gleiche Wandstärke t wie die Wanddicke s_{b} wie des Schwallwandelements 3auf und kann gerade (wie in Fig. 5 dargestellt) oder auch gewölbt (vgl. Fig. 3 und 2) ausgebildet sein.

In der Ausführung gemäß Fig. 6A ist das Anschlussende 10A als U-förmig zusammengeklapptes Dopplerblech ausgebildet, welches das Schwallwandelement 3 schuhförmig umfasst.

Die Ausführung in Fig. 6B zeigt ein Anschlussstück 10B, welches als einseitig überlappend angebrachte Platte mit dem Schwallwandelement 3 verschweißt ist.

Alternativ zu dem hier dargestellten Übergang, bei dem zwischen der Entlastungskante 14 und der freien Kante 7 eine Ecke ausgebildet ist, gibt es auch Ausführungen, bei denen durch eine entsprechende Ausarbeitung der freien Kante 7 am Schwallwandelement 3 und dem Anschlussstück 10A bzw. 10B ein glatter, ausgerundeter Übergang ausgebildet ist (siehe gestrichelte Darstellung in Fig. 6A und 6B).

Die vorliegende Erfindung betrifft also ein Schwallwandelement (3) mit einem Anschlussende (10), welches einen ersten Anschlussbereich (11) zum Anschluss an eine Behälterwand (6) aufweist und eine Entlastungskante (14), welche ein Ende einer freien Schwallwandkante (7) mit dem ersten Anschlussbcreich (11) verbindet, wobei die Entlastungskante (14) einen ersten Abschnitt (15) aufweist, der entlang dem ersten Anschlussbereich (11) verläuft und mit diesem einen Rippenabschnitt (16) bildet, einen zweiten Abschnitt (18), der den ersten Abschnitt (15) mit einer freien Kante (7) des Schwallwandelements (3) verbindet, und die Entlastungskante (14) glatt zwischen dem ersten Anschlussbereich (11) und der freien Kante (7) verläuft. Die Erfindung betrifft weiterhin eine Transportbehälteranordnung, insbesondere Tankcontainer, mit einem solchen Schwallwandelement.

Weitere Ausführungen ergeben sich für den Fachmann im Rahmen der Ansprüche.

## Patentansprüche

1. Schwallwandelement (3) mit einem Anschlussende (10; 10'; 10A; 10B), welches
einen ersten Anschlussbereich (11) zum Anschluss an eine Behälterwand (6) aufweist und
eine Entlastungskante (14), welche ein Ende einer freien Schwallwandkante (7) mit dem ersten Anschlussbereich (11) verbindet, wobei
die Entlastungskante (14) einen ersten Abschnitt (15) aufweist, der entlang dem ersten Anschlussbereich (11) verläuft und mit diesem einen Rippenabschnitt (16) bildet,
einen zweiten Abschnitt (18), der den ersten Abschnitt (15) mit der freien Kante (7) des Schwallwandelements (3) verbindet, **dadurch gekennzeichnet, dass** die Entlastungskante (14) glatt zwischen dem ersten Anschlussbereich (11) und der freien Kante (7) verläuft.

2. Schwallwandelement (3) nach Anspruch 1, bei welchem der erste Abschnitt (15) über einen konkav gekrümmten Übergangsabschnitt, der einen ersten Radius (R) aufweist, mit dem zweiten Abschnitt (18) verbunden ist.

3. Schwallwandelement (3) nach Anspruch 1 oder 2, bei welchem die Entlastungskante (14) am Ende des ersten Abschnitts (15) einen konvex gekrümmten Endabschnitt (17) mit einem zweiten Radius (r) aufweist, wobei der erste Radius (R) größer als der zweite Radius (r) ist.

4. Schwallwandelement (3) nach Anspruch 3, bei welchem zwischen dem zweiten Abschnitt (18) und dem Endabschnitt (17) ein gerader Verbindungsabschnitt (22) verläuft.

5. Schwallwandelement (3) nach Anspruch 4, bei welchem der gerade Verbindungsabschnitt (22) mit dem ersten Anschlussbereich (11) einen Winkel (α) einschließt, so dass sich der Rippenabschnitt (16) vom Übergangsabschnitt ausgehend zum Endabschnitt (17) hin verjüngt, wobei der Winkel (α) zwischen 5° und 20°, vorzugsweise zwischen 8° und 12° und noch bevorzugter bei 10° liegt.

6. Schwallwandelement (3) nach einem der vorhergehenden Ansprüche, bei welchem die Entlastungskante (14) im Übergangsabschnitt bezüglich der freien Kante (7) um einen Betrag (d) zurückspringt.

7. Schwallwandelement (3) nach einem der vorhergehenden Ansprüche, bei welchem das Anschlussende (10; 10A; 10B) plattenförmig mit einer Wandstärke (t) ausgebildet ist, die das ein- bis zweifache einer Wanddicke (s_{b}) des Schwallwandelements (3) beträgt und einen zweiten Anschlussbereich (20) aufweist, der mit dem Schwallwandelement (3) verbunden ist.

8. Schwallwandelement (3) nach Anspruch 7, bei welchem das Anschlussende (10) in einer im Schwallwandelement (3) ausgebildeten Ausnehmung (21) verschweißt ist, deren Kontur dem zweiten Anschlussbereich (20) entspricht.

9. Schwallwandelement (3) nach Anspruch 7, bei welchem das Anschlussende (10A) als U-förmig gekanteter Schuh ausgebildet ist, der die freie Kante (7) teilweise umfasst.

10. Transportbehälteranordnung, insbesondere Tankcontainer, mit einem Behälter (1) der in seinem Innern (2) ein Schwallwandelement (3) nach einem der vorhergehenden Ansprüche aufweist.

11. Transportbehälteranordnung nach Anspruch 11, mit Schwallwandelementen (3) bei denen die Anschlussenden (10; 10'; 10A; 10B) mit ihrem ersten Anschlussbereich (11) über ein Dopplerblechelement (12) mit der Behälterwand (6) verbunden sind, das teilweise in einen Anschlussbereich des Schwallwandelelements (3) hineinragt.

## Claims

1. A baffle plate element (3) having a connection end (10; 10'; 10A; 10B), which has a first connection region (11) for connection to a vessel wall (6) and a relief edge (14), which connects one end of a free baffle plate edge (7) to the first connection region (11),
the relief edge (14) having a first portion (15) that extends along the first connection region (11) and forms a rib portion (16) therewith,
a second portion (18), which connects the first portion (15) to the free edge (7) of the baffle plate element (3), **characterized in that** the relief edge (14) extends smoothly between the first connection region (11) and the free edge (7).

2. The baffle plate element (3) according to claim 1, in which the first portion (15) is connected to the second portion (18) via a concavely curved transition portion which has a first radius (R).

3. The baffle plate element (3) according to claim 1 or 2, in which, at the end of the first portion (15), the relief edge (14) has a convexly curved end portion (17) having a second radius (r), the first radius (R) being greater than the second radius (r).

4. The baffle plate element (3) according to claim 3, in which a straight connection portion (22) extends between the second portion (18) and the end portion (17).

5. The baffle plate element (3) according to claim 4, in which the straight connection portion (22) and the first connection region (11) enclose an angle (α), so that the ribbed portion (16) tapers from the transition portion towards the end portion (17), the angle (α) being between 5° and 20°, preferably between 8° and 12° and even more preferably 10°.

6. The baffle plate element (3) according to any of the preceding claims, in which the relief edge (14) in the transition portion is recessed with respect to the free edge (7) by an amount (d).

7. The baffle plate element (3) according to any of the preceding claims, in which the connection end (10; 10A; 10B) is formed in plate-shaped fashion with a wall thickness (t), which is one to two times a wall thickness (s_{b}) of the baffle plate element (3) and has a second connection region (20), which is connected to the baffle plate element (3).

8. The baffle plate element (3) according to claim 7, in which the connection end (10) is welded in a recess (21) formed in the baffle plate element (3), the contour of which recess corresponds to the second connection region (20).

9. The baffle plate element (3) according to claim 7, in which the connection end (10A) is formed as a U-shaped folded shoe which partially surrounds the free edge (7).

10. A transport vessel assembly, in particular tank container, having a vessel (1), which has in its interior (2) a baffle plate element (3) according to any of the preceding claims.

11. The transport vessel assembly according to claim 11, comprising baffle plate elements (3), in which the connection ends (10; 10'; 10A; 10B) with the first connection region (11) thereof are connected to the vessel wall (6) via a doubler sheet metal element (12), which partly projects into a connection region of the baffle plate element (3).

## Revendications

1. Elément brise-flot (3) qui comporte une extrémité de raccordement (10 ; 10' ; 10A ; 10B), laquelle présente une première zone de raccordement (11) destinée au raccordement à une paroi de conteneur (6), et un bord de décharge (14) lequel relie une extrémité d'un bord libre de brise-flot (7) à la première zone de raccordement (11), le bord de décharge (14) présentant une première section (15) qui s'étend le long de la première zone de raccordement (11) et forme une partie nervurée (16) avec cette dernière, une seconde section (18) qui relie la première section (15) au bord libre (7) de l'élément brise-flot (3), **caractérisé en ce que**
le bord de décharge (14) s'étend de manière lisse entre la première zone de raccordement (11) et le bord libre (7).

2. Elément brise-flot (3) selon la revendication 1, dans lequel la première section (15) est reliée à la seconde section (18) par l'intermédiaire d'une section de transition à courbure concave présentant un premier rayon (R).

3. Elément brise-flot (3) selon la revendication 1 ou 2, dans lequel le bord de décharge (14) présente à l'extrémité de la première section (15) une section d'extrémité (17) à courbure convexe présentant un second rayon (r), le premier rayon (R) étant supérieur au second rayon (r).

4. Elément brise-flot (3) selon la revendication 3, dans lequel entre la seconde section (18) et la section d'extrémité (17) s'étend une section droite de raccordement (22).

5. Elément brise-flot (3) selon la revendication 4, dans lequel la section droite de raccordement (22) forme un angle (α) avec la première zone de raccordement (11), de manière à ce que la partie nervurée (16) se rétrécit en partant de la section de transition vers la section d'extrémité (17), l'angle (α) étant compris entre 5° et 20°, de préférence entre 8° et 12°, et de manière encore plus préférée est de l'ordre de 10°.

6. Elément brise-flot (3) selon l'une des revendications précédentes, dans lequel dans la section de transition le bord de décharge (14) est en retrait d'une distance (d) par rapport au bord libre (7).

7. Elément brise-flot (3) selon l'une des revendications précédentes, dans lequel l'extrémité de raccordement (10 ; 10' ; 10A ; 10B) est conçue en forme de plaque avec une épaisseur de paroi (t) de l'ordre d'une à deux fois une épaisseur de paroi (s_{b}) de l'élément brise-flot (3) et présente une seconde zone de raccordement (20) reliée à l'élément brise-flot (3).

8. Elément brise-flot (3) selon la revendication 7, dans lequel l'extrémité de raccordement (10) est soudée à l'intérieur d'un évidement (21), formé dans l'élément brise-flot (3), dont le contour correspond à la seconde zone de raccordement (20).

9. Elément brise-flot (3) selon la revendication 7, dans lequel l'extrémité de raccordement (10A) a la forme d'une chaussure avec des bords en forme de U, laquelle enferme partiellement le bord libre (7).

10. Agencement de conteneur de transport, en particulier conteneur citerne, comprenant un conteneur (1) présentant en son intérieur (2) un élément brise-flot (3) selon l'une des revendications précédentes.

11. Agencement de conteneur de transport selon la revendication 10, présentant des éléments brise-flot (3), dans lesquels les extrémités de raccordement (10 ; 10' ; 10A ; 10B) sont reliées avec leur première zone de raccordement (11) à la paroi de conteneur (6) par l'intermédiaire d'un élément en tôle doppler (12) faisant partiellement saillie dans une zone de raccordement de l'élément brise-flot (3).
